# EUROPEAN PATENT SPECIFICATION

(11) **EP 2 611 259 B1**
(45) Date of publication and mention of the grant of the patent: **16.11.2022**
(21) Application number: 11816111.6
(22) Date of filing: 11.08.2011
(51) Int. Cl.: H04L 41/0853, H04W 92/20, H04W 36/00, H04L 41/0816, H04W 84/04, H04W 16/26

(54) **METHOD, DEVICE AND SYSTEM FOR SENDING AND RECEIVING INTERFACE CONNECTIVITY INFORMATION**
VERFAHREN, VORRICHTUNG UND SYSTEM ZUM SENDEN UND EMPFANGEN VON SCHNITTSTELLENKONNEKTIVITÄTSINFORMATIONEN
PROCÉDÉ, DISPOSITIF ET SYSTÈME PERMETTANT D'ENVOYER ET DE RECEVOIR DES INFORMATIONS DE CONNECTIVITÉ D'INTERFACE

(30) Priority: 12.08.2010 CN 201010251893
(43) Date of publication of application: 03.07.2013
(73) Proprietor: Datang Mobile Communications Equipment Co., Ltd., Beijing 100085 (CN)
(72) Inventor: JIA, Beibei, Beijing 100191 (CN); ZHANG, Dajun, Beijing 100191 (CN); BAO, Wei, Beijing 100191 (CN); YANG, Yi, Beijing 100191 (CN)
(74) Representative: Studio Torta S.p.A.
(86) International application number: PCT/CN2011/078304
(87) International publication number: WO 2012/019553

(56) References cited:
- CN-A- 101 483 912
- CN-A- 101 583 153
- CN-A- 101 784 135
- CN-A- 101 827 368
- CN-A- 101 854 633
- CN-A- 102 104 996
- ERICSSON: "X2 Connections Setup to Other Nodes", 3GPP DRAFT; R3-101890, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Beijing; 20100629, 23 June 2010 (2010-06-23), XP050453801, [retrieved on 2010-06-23]
- HUAWEI: "Consideration on HO type choosing issue", 3GPP DRAFT; R3-101867 CONSIDERATION ON HO TYPE CHOOSING ISSUE_HW, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Beijing; 20100629, 23 June 2010 (2010-06-23), XP050453780, [retrieved on 2010-06-23]
- MOTOROLA: "Neighboring cell handling and HO Type determination", 3GPP DRAFT; R3-102122 NEIGHBORING CELL HANDLING AND HO TYPE DETERMINATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Madrid, Spain; 20100823, 15 August 2010 (2010-08-15), XP050453004, [retrieved on 2010-08-15]
- MOTOROLA: "HO Type determination", 3GPP DRAFT; R3-101829 HO TYPE DETERMINATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Beijing; 20100629, 23 June 2010 (2010-06-23), XP050453745, [retrieved on 2010-06-23]
- QUALCOMM INCORPORATED: "ANR function and X2 management for Relay Nodes", 3GPP DRAFT; R3-101943, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Beijing; 20100629, 23 June 2010 (2010-06-23), XP050453854, [retrieved on 2010-06-23]
- NOKIA SIEMENS NETWORKS: "Challenges of X2 deployment for Relay nodes", 3GPP DRAFT; R3-101948 X2 CHALLENGES RELAYS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Beijing; 20100629, 23 June 2010 (2010-06-23), XP050453859, [retrieved on 2010-06-23]

## Description

### Field of the Invention

The present invention relates to communication field, in particular to a method, device and system for sending and receiving interface connectivity information.

### Background of the Invention

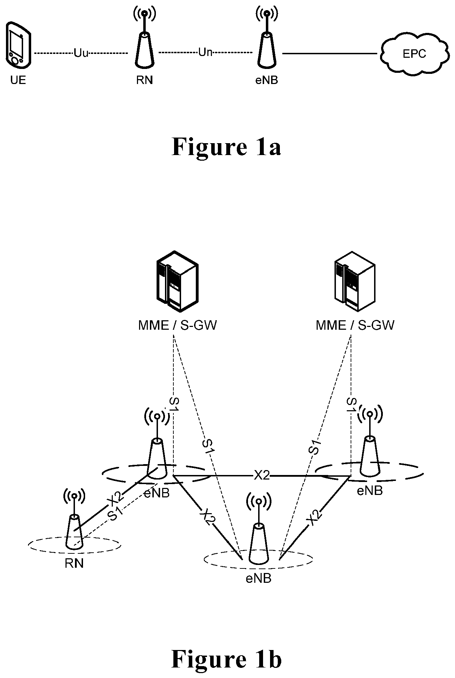

The cost of eNB is often high. In development of 3G (3rd-generation) technology, construction of a great number of eNBs will arouse higher deployment cost. To reduce the cost, relay is gradually introduced into honeycomb system to increase the coverage of eNB signal. Fig. 1a shows the network frame of LTE-A (LTE-Advanced) system after introducing RN (Relay Node). RN is accessed into corenet through donor cell below DeNB (Donor Evolved Node B) and no direct wired interface is provided between RN and corenet. Each RN can control one or several cells. Under this frame, interface between UE (User Equipment) and RN is called Uu interface and that between RN and DeNB is called Un interface. Several RN can be connected to a DeNB while an RN can only be connected to a DeNB.

Fig. 1b shows the structural diagram of LTE-A system after introducing RN. S1 interface is connected to node eNB in E-UTRAN (Evolved UTRAN) at one side and to node MME/S-GW (Mobility Management Entity/ Serving Gateway) in EPC (Evolved Packet Core) at the other side, or connected to eNB at one side and to RN at the other side. X2 interface is located between node eNBs in E-UTRAN or between eNB and RN. X2 interface of many-to-many relationship is provided between eNBs and X2 connection may be provided among all eNodeBs within a certain area. The major purpose for existence of X2 interface lies in supporting mobility management function of UE in connection state. Besides, the main function of X2 interface comprises load management function, cell interference coordination function, common X2 management function and error control function.

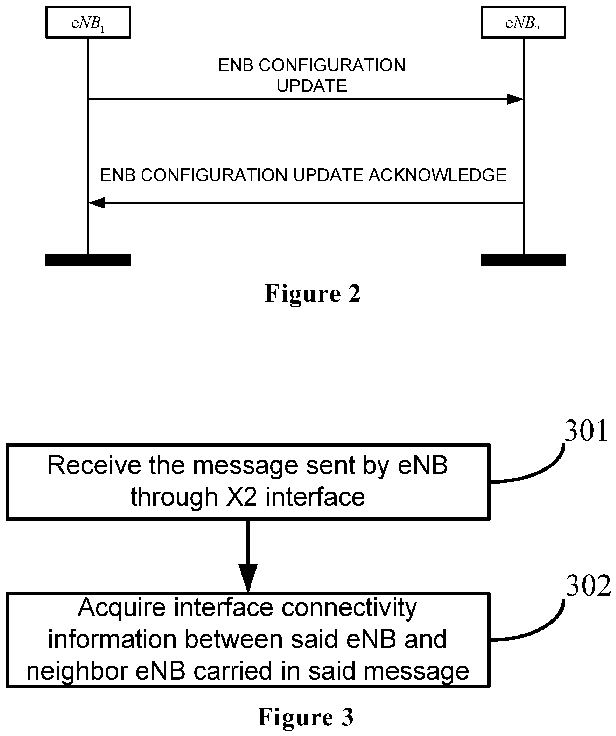

In LTE (Long Term Evolution) system, when an eNB requires X2 interface application configuration, such as to increase/decrease or modify cell configuration, it is necessary to update eNB configuration, as shown in Fig. 2. eNB 1 sends eNB configuration update message to eNB2, including the added/decreased cell PCI (Physical Cell Identifier), ECGI (E-UTRAN Cell Global Identifier, E-UTRAN), frequency and other information. If eNB2 can accept the updating, eNB1 configuration information stored itself will be updated and eNB configuration update acknowledge message will be returned to eNB 1. Every cell has the only ID ECGI that is 52 bit and composed of PLMN (Public Land Mobile Network) ID, eNB ID and cell ID. Wherein, PLMN ID and eNB ID constitute the only ID global eNB ID of eNB which is 44 bit in total, and cell ID is the remaining 8 bit. At present, ECGI of cell is generally distributed by OAM (Operation Administration and Maintenance).

In LTE system at present, eNB can only acquire interface connectivity information of neighbor eNB through X2 connection setup process or eNB configuration update process, including which cells neighbor eNB manages and the ID, frequency and other information of those cells. After introducing RN, RN and DeNB only have an X2 interface and an S1 interface since DeNB has S1/X2 AP agent function, viz. RN can only acquire information of cell managed by DeNB through said X2 connection setup process or eNB configuration update process. However, RN requires acquiring interface connectivity information of DeNB and other eNB during handover, ANR (Automatic Neighbor Relation), interference coordination and load equilibrium. To settle the problem, a new mechanism for acquiring interface connectivity is required.

ETICSSON, "X2 Connections Setup to Other Nodes" (3GPP TSG-RAN WG3 AdHoc) discloses that an appropriate IE could be added to the X2 SETUP REQUEST / X2 SETUP RESPONSE messages (in principle, X2 setup could be initiated by the RN or by the DeNB), as well as to the eNB CONFIGURATION UPDATE message (to be used by the DeNB to communicate updates to the X2 connections list).

HUAWEI, "Consideration on HO type choosing issue" (3GPP TSG-RAN WG3 AH) discloses that DeNB sends the information of MME pools which the neighbour eNB belongs to, and whether the RN can initial X2 handover depend on RN's judgement and decision.

QUALCOMM INCORPORATED: "ANR function and X2 management for Relay Nodes" (3GPP DRAFT; R3-101943) discloses that for the ENB CONFIGURATION UPDATE message received the RN, the message contents will look somewhat different in terms of the Served Cell Information contained in the message. The cells contained in this message normally have CGIs that map the same eNB ID. However, in case of RN, due to the proxy function in the DeNB, there will also be cells of neighbour eNBs with CGIs mapping to different eNB IDs.

NOKIA SIEMENS NETWORKS: "Challenges of X2 deployment for Relay nodes" (3GPP DRAFT; R3-101948) discloses that the DeNB shall confirm if the X2 interface with the neighbour eNB has been established by sending an eNB CONFIGURATION UPDATE procedure including details of the neighbour eNB cell to the RN.

### Summary of the Invention

The present invention relates to a method, device and system for sending and receiving interface connectivity information, as defined in the accompanying claims, to enable RN to acquire interface connectivity information of DeNB and neighbour eNBs of the DeNB.

Compared with the present technology, the embodiments of the present invention at least possess the following advantages:
DeNB sends the message carrying interface connectivity information between DeNB and neighbor eNB of the DeNB through X2 interface to enable relay node of DeNB to acquire the interface connectivity information between DeNB and neighbor eNB of DeNB to further accomplish handover, automatic neighbor relation setup, interference coordination and load equilibrium.

### Brief Description of the Drawings

To further clearly explain the technical proposal in the embodiments of the present invention or present technology, attached drawings required in the embodiments of the present invention or present technology description shall be simply introduced below. Obviously, drawings described below are only some embodiments of the present invention, and for ordinary technicians of this field, they can also acquire other attached drawings based on these drawings on the premise of paying no creative work.
Fig.1a is a network architecture diagram of LTE-A system after introducing RN in present technology;
Fig.1b is a structural diagram of LTE-A system after introducing RN in present technology;
Fig. 2 is a schematic diagram of eNB configuration update process in present technology;
Fig. 3 is a schematic diagram of method for receiving interface connectivity information provided in Embodiment I of the present invention;
Fig. 4 is a schematic diagram of method for receiving interface connectivity information provided in Embodiment III of the present invention;
Fig. 5 is a schematic diagram of method for receiving interface connectivity information provided in Embodiment IV of the present invention;
Fig. 6 is a schematic diagram of method for receiving interface connectivity information provided in Embodiment V of the present invention;
Fig. 7 is a schematic diagram of method for receiving interface connectivity information provided in Embodiment VI of the present invention;
Fig. 8-11 is a structural diagram of network device provided in Embodiment VII of the present invention;
Fig. 12 is a structural diagram of eNB provided in Embodiment VIII of the present invention.

### Detailed Description of Preferred Embodiments

Then we will clearly and completely describe the technical proposals in the embodiments of the present invention in combination of the attached drawings therein. Obviously, the embodiments described below are only a part of the embodiments of the present invention instead of the whole. Based on the embodiments of the present invention, other embodiments acquired by ordinary technicians of this field on the premise of paying no creative work all belong to the protected scope of the embodiments of the present invention. Embodiments I to IV and VI to IX and the following embodiments referring to the judging method a) and c) in the embodiment V are not according to the invention and are present for illustration purpose only.

### Embodiment I

Embodiment I of the present invention provides a method for receiving interface connectivity information, as shown in Fig. 3, including:
Step 301, receive message sent by eNB through X2 interface;
Step 302, acquire interface connectivity information between side eNB and neighbor eNB carried in said message.

Said message is specifically eNB configuration update message.

Before step 302, it also includes:
Acquire serving cell information carried in configuration update message of said eNB, and judge that configuration update message of said eNB carries configuration information of neighbor eNB of said eNB or configuration information of said eNB according to serving cell information; or
When configuration update message of said eNB carries global eNB ID IE, judge that configuration update message of said eNB carries configuration information of neighbor eNB of said eNB, otherwise, judge that configuration update message of said eNB carries configuration information of said eNB ; or
Acquire global eNB ID IE carried in configuration update message of said eNB, and judge that configuration update message of said eNB carries configuration information of neighbor eNB of said eNB or configuration information of said eNB according to global eNB ID IE.

Said message also can be indirect eNB configuration update message specifically. At that time before step 301, it also includes sending indirect eNB configuration update request message to said eNB.

Said interface connectivity information contains the following one or several kinds of information: ID of neighbor eNB having X2 interface with said eNB; serving cell configuration information of said neighbor eNB; serving cell configuration information added by said neighbor eNB; serving cell configuration information modified by said neighbor eNB; serving cell configuration information deleted by said neighbor eNB; neighbor cell configuration information of serving cell of said neighbor eNB; MME POOL information of said neighbor eNB; energy-saving status of serving cell of said neighbor eNB.

After step 302, it also includes sending handover request to eNB, acquiring failure reason carried thereof after receiving handover preparation failure message sent by said eNB, indicating nonexistence of X2 interface according to said failure reason and updating interface connectivity information between said eNB and neighbor eNB stored.

### Embodiment II

Embodiment II of the present invention provides a method for sending interface connectivity information, eNB sends message through X2 interface and the message carries the interface connectivity information between said eNB and neighbor eNB.

Wherein, said message is specifically eNB configuration update message. Said eNB configuration update message distinguishes the carried configuration information is that of neighbor eNB of said eNB or that of said eNB through the carried serving cell information, or said eNB configuration update message distinguishes the carried configuration information is that of neighbor eNB of said eNB or that of said eNB through whether it is carried with global eNB ID IE, or said eNB configuration update message distinguishes the carried configuration information is that of neighbor eNB of said eNB or that of said eNB through the carried global eNB ID IE.

Said message also can be indirect eNB configuration update information specifically.

Said interface connectivity information contains the following one or several kinds of information: ID of neighbor eNB having X2 interface with said eNB; serving cell configuration information of said neighbor eNB; serving cell configuration information added by said neighbor eNB; serving cell configuration information modified by said neighbor eNB; serving cell configuration information deleted by said neighbor eNB; neighbor cell configuration information of serving cell of said neighbor eNB; MME POOL information of said neighbor eNB; energy-saving status of serving cell of said neighbor eNB.

When handover request is received subsequently and the handover preparation fails due to nonexistence of X2 interface, it also includes: said eNB indicates X2 interface does not exist in failure reason carried in handover preparation failure message.

### Embodiment III

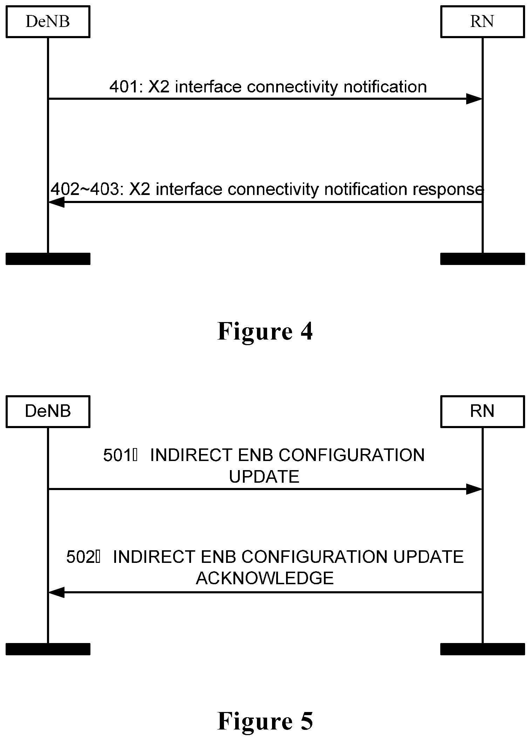

Embodiment III of the present invention provides a method for acquiring interface connectivity information. DeNB sends interface connectivity information of itself and neighbor eNB through X2 interface. In embodiments of the present invention, RN is taken as the example to introduce device connected to DeNB through X2 interface, as shown in Fig. 4. The method comprises the following steps specifically:
Step 401, DeNB sends X2-AP message to RN to initiate X2 interface connectivity notification process to be used for DeNB to notify X2 interface connectivity information of DeNB to RN.

Wherein, X2 interface connectivity information mainly includes: ID of neighbor eNB having X2 interface with DeNB; serving cell configuration information of said neighbor eNB; serving cell configuration information added by said neighbor eNB; serving cell configuration information modified by said neighbor eNB; serving cell configuration information deleted by said neighbor eNB (PCI, ECGI, frequency, etc.); neighbor cell configuration information of serving cell of neighbor eNB; energy-saving status of serving cell of neighbor eNB, MME POOL information of neighbor eNB. DeNB sends X2-AP message to RN in a periodic or incident-triggering manner. The way of incident triggering is to send X2-AP message to RN after adding and/or modifying and/or deleting cell configuration information or MME POOL information.

Step 402, RN receives X2 interface connectivity notification message, saves X2 interface connectivity information of DeNB and neighbor eNB and sends X2 interface connectivity notification acknowledge message to DeNB.

Step 403, DeNB receives X2 interface connectivity notification acknowledge message returned from RN and verifies X2 interface connectivity notification process is finished.

### Embodiment IV

In Embodiment IV of the present invention, it specifically defines X2-AP message in Embodiment III, as shown in Fig. 5. X2-AP message in Embodiment IV of the present invention is specifically indirect eNB configuration update message. The method specifically includes the following steps:
Step 501, DeNB sends indirect eNB configuration update message to RN to initiate X2 interface configuration update process to notify RN the configuration information of all other eNBs having X2 interface with DeNB.

Configuration information of all other eNBs having X2 interface with DeNB is namely *eNB List* IE, which comprises neighbor eNB ID, serving cell configuration information of said neighbor eNB; serving cell configuration information added by said neighbor eNB; serving cell configuration information modified by said neighbor eNB; serving cell configuration information deleted by said neighbor eNB (PCI, ECGI, frequency, etc.), neighbor cell configuration information serving cell of neighbor eNB , energy-saving status of serving cell of neighbor eNB , MME POOL information of neighbor eNB, viz. including X2 interface connectivity information of DeNB and neighbor eNB.

Step 502, RN acquires X2 interface connectivity information of DeNB and neighbor eNB, saves and updates configuration information of neighbor eNB, returns indirect eNB configuration update acknowledge message to DeNB and verifies the configuration update process is finished.

It is necessary to explain that before step 501, it also includes: RN sends indirect eNB configuration update request message to DeNB to request DeNB to notify RN the configuration information of neighbor eNB. The process is optional.

Wherein, format of INDIRECT ENB CONFIGURATION UPDATE message is shown in Table 1:

**Table 1**

| **IE/Gro up Name** | **Presence** | **Range** | **IE type and reference** | **Semantics description** | **Critic ality** | **Assigne d Criticali ty** |
|---|---|---|---|---|---|---|
| Messag e Type | M (Mandator y) | | 9.2.13 | | YES | Reject |
| eNB List | | *0 to max eNBs* | | This list includes the eNBs having X2 connection with the DeNB | GLOB AL | Reject |
| >Global eNB ID | M (Mandator y) | | 9.2.22 | | YES | Reject |
| >Served cells To Add | | *0 to maxCelli neNB* | | | GLOB AL | Reject |
| >>Serv ed cell Informa tion | M (Mandator y) | | 9.2.8 | | - | - |
| >>Neig hbour Informa tion | | *0 to maxnoof Neighbo urs* | | | | |
| >>>EC GI | M (Mandator y) | | ECGI 9.2.14 | E-UTRAN Cell Global Identifier of the neighbour cell | - | - |
| >>>PCI | M (Mandator y) | | INTEGE R (0..503, ...) | Physical Cell Identifier of the neighbour cell | - | - |
| >>>EA RFCN( E-UTRA Absolut e Radio Frequen cy Channel Number , E-UTRA N | M (Mandator y) | | 9.2.26 | DL EARFCN for FDD and EARFCN for TDD | - | - |
| >Served cells To Modify | | *0 to maxCelli neNB* | | | GLOB AL | Reject |
| >>Old ECGI | M (Mandator y) | | ECGI 9.2.14 | This is the old E-UTRAN Cell Global Identifier | - | - |
| >>Serv ed cell Informa tion | M (Mandator y) | | 9.2.8 | | - | - |
| >>Neig hbour Informa tion | | *0 to maxnoof Neighbo urs* | | | | |
| >>>EC GI | M (Mandator y) | | ECGI 9.2.14 | E-UTRAN Cell Global Identifier of the neighbour cell | - | - |
| >>>PCI | M (Mandator y) | | INTEGE R (0..503, ...) | Physical Cell Identifier of the neighbour cell | - | - |
| >>>EA RFCN | M (Mandator y) | | 9.2.26 | DL EARFCN for FDD and EARFCN for TDD DL EARFCN for FDD and EARFCN for TDD | - | - |
| >>Deac tivation Indicati on | O (Optional) | | ENUMER ATED (deactivat ed,...) | Indicates the concerned cell is switched off for energy saving reasons | YES | Ignore |
| >Served cells To Delete | | *0 to maxCelli neNB* | | | GLOB AL | Reject |
| >>Old ECGI | M (Mandator y) | | ECGI 9.2.14 | This is the old E-UTRAN Cell Global Identifier of the cell to be deleted | - | - |
| >GU Group Id To Add List | | *0 to maxPool s* | | | GLOB AL | Reject |
| >>GU | M | | 9.2.20 | | - | - |
| Group Id | (Mandator y) | | | | | |
| >GU Group Id To Delete List | | *0 to maxPool s* | | | GLOB AL | Reject |
| >>GU Group Id | M (Mandator y) | | 9.2.20 | | - | - |

Format of INDIRECT ENB CONFIGURATION UPDATE ACKNOWLEDGE message is shown in Table 2:

**Table 2**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | Reject |
| Criticality Diagnostics | O | | 9.2.7 | | YES | Ignore |

### Embodiment V

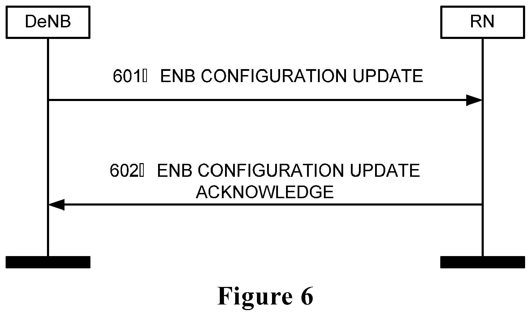

In Embodiment V of the present invention, it specifically defines X2-AP message in Embodiment III, as shown in Fig. 6. X2-AP message in Embodiment V of the present invention is specifically eNB configuration update message. The method specifically includes the following steps:
Step 601, DeNB sends eNB configuration update message that carries X2 interface connectivity information of DeNB and neighbor eNB to RN to initiate X2 interface configuration update process. Wherein, DeNB organizes the eNB configuration update message comprises all present neighbor eNB configuration information according to information of X2 interface setup process and eNB configuration update process from neighbor eNB.
Step 602, RN saves and updates X2 interface connectivity information of DeNB and neighbor eNB, returns eNB configuration update acknowledge message to DeNB to verify that configuration update process is finished.

Specifically, RN is required to judge the carried information thereof is configuration information of DeNB or that of DeNB neighbor eNB after receiving eNB configuration update message. The judging method includes any of the following three kinds:
a) If the former 44 bit (used to identify global eNB ID) in serving cell ECGI in eNB configuration update message received by RN is the same as the global eNB ID of RN itself, RN judges it is the configuration information of DeNB, or it is the configuration information of DeNB neighbor eNB;
b) If global *eNB ID* IE is not carried in eNB configuration update message, RN judges it is the configuration information of DeNB; if global *eNB ID* IE is carried, RN judges the eNB configuration update process is used for transmitting configuration information of DeNB neighbor eNB to RN;
c) *Global eNB ID* IE is constantly carried in eNB configuration update message. If global *eNB ID* IE is the same as global eNB ID of RN, RN judges it is the configuration information of DeNB, or it is the configuration information of DeNB neighbor eNB.

The format of ENB CONFIGURATION UPDATE message is specifically shown in Figure 3,

**Table 3**

| **IE/Grou p Name** | **Prese nce** | **Ran ge** | **IE type and reference** | **Semantic s descriptio n** | **Critical ity** | **Assigne d Criticali ty** |
|---|---|---|---|---|---|---|
| Message Type | M | | 9.2.13 | | YES | Reject |
| Global eNB ID | O | | 9.2.22 | | YES | Ignore |
| **Served cells To Add** | | *0to max Celli neNB* | | | GLOB AL | Reject |
| >Served cell Informati | M | | 9.2.8 | | - | - |
| on | | | | | | |
| **> Neighbo ur Informa tion** | | *0to maxn oojN eighb ours* | | | - | - |
| » ECGI | M | | ECGI 9.2.14 | E-UTRAN Cell Global Identifier of the neighbour cell | - | - |
| » PCI | M | | INTEGER (0..503, ) | Physical Cell Identifier of the neighbour cell | - | - |
| » EARFC N | M | | 9.2.26 | DL EARFCN for FDD and EARFCN for TDD | - | - |
| **Served cells To Modify** | | *0 to max Celli neNB* | | | GLOB AL | Reject |
| >Old ECGI | M | | ECGI 9.2.14 | This is the old E-UTRAN Cell Global Identifier | - | - |
| >Served cell Informati on | M | | 9.2.8 | | - | - |
| **> Neighbo ur Informa tion** | | *0 to maxn oofN eighb ours* | | | - | - |
| » ECGI | M | | ECGI 9.2.14 | E-UTRAN Cell Global Identifier of the neighbour cell | - | - |
| » PCI | M | | INTEGER (0..503, ) | Physical Cell Identifier of the neighbour cell | - | - |
| » EARFC N | M | | 9.2.26 | DL EARFCN for FDD and EARFCN for TDD | - | - |
| >Deactiv ation Indicatio n | O | | ENUMER ATED(dea ctivated, ...) | Indicates the concerned cell is switched off for energy saving | YES | Ignore |
| | | | | reasons | | |
| **Served cells To Delete** | | *0 to max Celli neNB* | | | GLOB AL | Reject |
| >Old ECGI | M | | ECGI 9.2.14 | This is the old E-UTRAN Cell Global Identifier of the cell to be deleted | - | - |
| **GU Group Id To Add List** | | *0 to max Pool* s | | | GLOB AL | Reject |
| >GU Group Id | M | | 9.2.20 | | - | - |
| **GU Group Id To Delete List** | | *0 to max Pool* s | | | GLOB AL | Reject |
| >GU Group Id | M | | 9.2.20 | | - | - |

### Embodiment VI

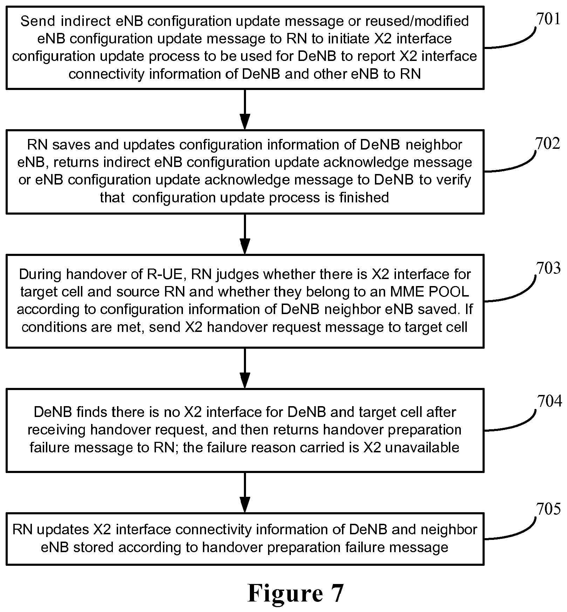

In Embodiments III~V of the present invention, RN can acquire X2 interface connectivity information of DeNB and other eNBs, but the occurrence of abnormal situation can not be excluded. For example, since DeNB reports information of a certain eNB having no X2 connection with DeNB to RN by mistake in indirect eNB configuration update message or reused/modified eNB configuration update message, or due to mistake judgment of RN handover, or owing to software operation, etc., handover failure may occur when RN initiates X2 handover to the eNB. Hence, in Embodiments VI of the present invention, RN knows the eNB having no X2 connection with DeNB by ways of carrying reason value: X2 not available in cause IE in handover preparation failure message returned by DeNB, as shown in Fig. 7, which includes the following steps:
Step 701, send indirect eNB configuration update or reused/modified eNB configuration update message to RN to initiate X2 interface configuration update process to be used for DeNB to report X2 interface connectivity information of DeNB and neighbor eNB to RN.
Step 702, RN saves and updates X2 interface connectivity information of DeNB and neighbor eNB, returns indirect eNB configuration update acknowledge or eNB configuration update acknowledge message to DeNB, and verifies that configuration update process is finished.
Step 703, during handover of R-UE, RN judges whether there is X2 interface for target cell and source RN and whether they belong to an MME POOL according to configuration information of DeNB neighbor eNB saved. If conditions are met, send X2 handover request message to target cell.
Step 704, DeNB finds out there is no X2 interface for DeNB and target cell after receiving handover request, and then returns handover preparation failure message to RN; the failure reason carried is X2 not available.
Step 705, RN updates X2 interface connectivity information of DeNB and neighbor eNB stored according to handover preparation failure message. For example, RN deletes the configuration information of neighbor eNB of DeNB in X2 interface connectivity information of DeNB and neighbor eNB with failure reason of X2 not available.

### Embodiment VII

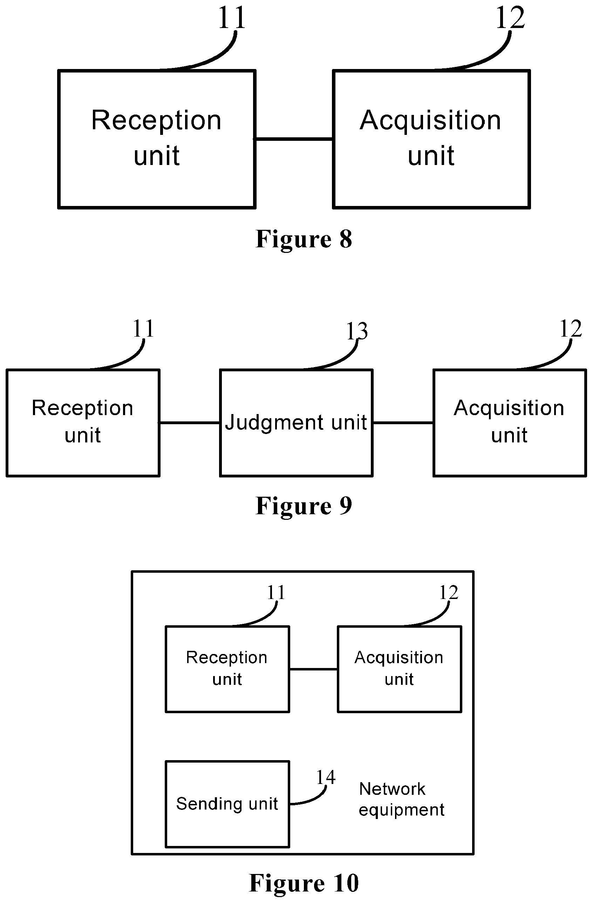

Embodiment VII of the present invention provides a network device, as shown in Fig. 8, including:
Reception unit 11, which is used to receive the message sent by eNB through X2 interface;
Acquisition unit 12, which is used to acquire interface connectivity information between said eNB and neighbor eNB carried in said message.

Said message is specifically eNB configuration update message, as shown in Fig. 9. The network device also includes judgment unit 13, which is used to:
Judge configuration information carried in said eNB configuration update message is the configuration information of neighbor eNB of said eNB or that of said eNB according to serving cell information carried in said eNB configuration update message; or,
Judge configuration information carried in said eNB configuration update message is the configuration information of neighbor eNB of said eNB or that of said eNB according to whether global eNB ID IE is carried in said eNB configuration update message; or,
Judge configuration information carried in said eNB configuration update message is the configuration information of neighbor eNB of said eNB or that of said eNB according to the global eNB ID IE carried in said eNB configuration update message.

Said message also can be indirect eNB configuration update message specifically; as shown in Fig. 10, the device also includes sending unit 14 that is used to send indirect eNB configuration update request message to said eNB.

Said interface connectivity information contains the following one or several kinds of information: ID of neighbor eNB having X2 interface with said eNB; serving cell configuration information of said neighbor eNB; serving cell configuration information added by said neighbor eNB; serving cell configuration information modified by said neighbor eNB; serving cell configuration information deleted by said neighbor eNB; neighbor cell configuration information of serving cell of said neighbor eNB; MME POOL information of said neighbor eNB; energy-saving status of serving cell of said neighbor eNB.

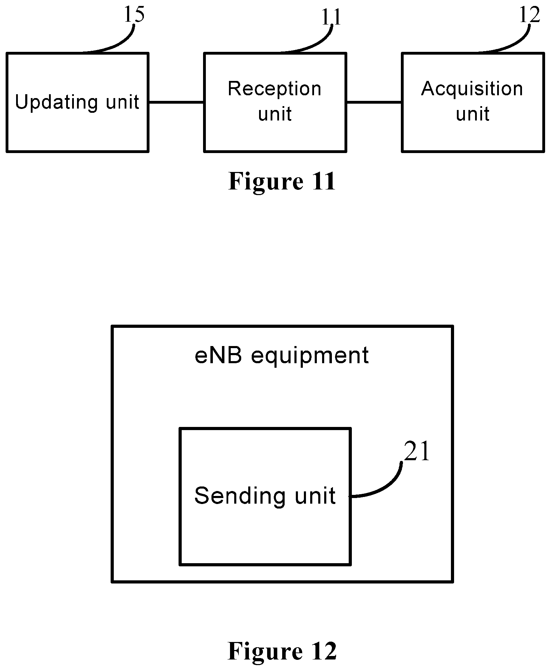

Said reception unit is also used to: receive handover preparation failure message sent by said eNB, as shown in Fig. 11. It also includes updating unit 15, which is used to update interface connectivity information between said eNB and neighbor eNB according to failure reason carried in said handover preparation failure message.

The network device is specifically relay node (RN).

### Embodiment VIII

Embodiment VIII of the present invention provides a kind of eNB, as shown in Fig. 12, including:
Sending unit 21, which is used to send message through X2 interface, and such message carries the interface connectivity information between said eNB and neighbor eNB.

Said message is specifically eNB configuration update message. Said eNB configuration update message distinguishes the carried configuration information is that of neighbor eNB of said eNB or that of said eNB through the carried serving cell information; or said eNB configuration update message distinguishes the carried configuration information is that of neighbor eNB of said eNB or that of said eNB through whether it is carried with global eNB ID IE; or said eNB configuration update message distinguishes the carried configuration information is that of neighbor eNB of said eNB or that of said eNB through the carried global eNB ID IE.

Said message can also be indirect eNB configuration update information specifically.

Said interface connectivity information contains the following one or several kinds of information: ID of neighbor eNB having X2 interface with said eNB; serving cell configuration information of said neighbor eNB; serving cell configuration information added by said neighbor eNB; serving cell configuration information modified by said neighbor eNB; serving cell configuration information deleted by said neighbor eNB; neighbor cell configuration information of serving cell of said neighbor eNB; MME POOL information of said neighbor eNB; energy-saving status of serving cell of said neighbor eNB.

Said sending unit 21 is also used to send handover preparation failure message carrying failure reason.

### Embodiment IX

Embodiment IX of the present invention provides a network device, including:
eNB, which is used to send message through X2 interface, and such message carries interface connectivity information between said eNB and neighbor eNB;
Relay node (RN), which is used to receive the message sent by eNB through interface X2 and acquire interface connectivity information between said eNB and neighbor eNB carried in said message.

In embodiments of the present invention, eNB sends message carrying interface connectivity information between eNB and neighbor eNB through X2 interface to enable relay node to acquire the interface connectivity information between eNB and neighbor eNB to further accomplish handover, automatic neighbor relation setup, interference coordination and load equilibrium.

Through description of the above embodiments, technical personnel of the field can clearly understand that the present invention is realized depending on software and necessary general hardware platform, and also can be realized through hardware, while the former is better in many cases. Based on this understanding, the technical solution of the present invention or the part making contributions to available technology can be essentially reflected by means of software product. This computer software product is stored in a storage medium, including several instructions to enable a computer unit (such as personal computer, sever, or network device, etc.) to implement the methods described in all embodiments of the present invention.

Technical personnel of the field can understand that the drawings only refer to the diagram of a preferred embodiment, and the module or procedure attached is not indispensable for the implementation of the embodiments of the present invention.

Technical personnel of the field can understand that the module of the unit of an embodiment can be distributed in such unit according to embodiment description, or located in one or more units of another embodiment through corresponding changes. Modules of the embodiments mentioned above can be merged into one module, or further divided into multiple sub-modules.

The number of the aforementioned embodiments of the present invention is only used for description rather than representing advantages or disadvantages.

Only several specific embodiments of the present invention are released above. However, the present invention is not only comprised of those.

## Claims

1. A method for a Relay Node, RN, of a Donor evolved Node B, DeNB, for receiving interface connectivity information sent by the DeNB, comprising:
the RN receiving (301) an eNB configuration update message sent by the DeNB through an X2 interface; and
the RN acquiring (302) interface connectivity information between the DeNB and a neighbor eNB of the DeNB carried in said message; wherein
the method also comprises following before acquiring the interface connectivity information between said DeNB and the neighbor eNB of the DeNB carried in said information:
judging that the configuration information carried in the message is that of said neighbor eNB of said DeNB or that of said DeNB through whether it is carried with a global eNB ID IE,
wherein the configuration update message of said DeNB carries a global eNB ID IE when the configuration update message carries configuration information of said neighbor eNB of said DeNB, and does not when the configuration update message carries configuration information of said DeNB.

2. The method as claimed in claim 1, wherein said interface connectivity information contains the following one or several kinds of information: ID of neighbor eNB of said DeNB having X2 interface with said DeNB; serving cell configuration information of said neighbor eNB of said DeNB; serving cell configuration information added by said neighbor eNB of said DeNB;
serving cell configuration information modified by said neighbor eNB of said DeNB; serving cell configuration information deleted by said neighbor eNB of said DeNB;
neighbor cell configuration information of serving cell of said neighbor eNB of said DeNB; MME POOL information of said neighbor eNE of said DeNB; energy-saving status of serving cell of said neighbor eNB of said DeNB.

3. The method as claimed in claim 1, further comprising:
acquiring failure reason carried thereof after receiving handover preparation failure message sent by said DeNB to indicate nonexistence of X2 interface, update interface connectivity information between said DeNB and neighbor eNB of said DeNB stored according to said failure reason.

4. A method for a Donor evolved Node B, DeNB, for sending interface connectivity information to a Relay Node, RN, of the DeNB, comprising:
the DeNB sending an eNB configuration update message through an X2 interface, said message carrying interface connectivity information between said DeNB and a neighbor eNB of said DeNB; wherein
said eNB configuration update message distinguishes that the carried configuration information is that of said neighbor eNB of said DeNB or that of said DeNB through whether it is carried with a global eNB ID IE,
wherein the configuration update message of said DeNB carries a global eNB ID IE when the configuration update message carries configuration information of said neighbor EnB of said DeNB, and does not when the configuration update message carries configuration information of said DeNB.

5. The method as claimed in claim 4, wherein, said interface connectivity information containing the following one or several kinds of information: ID of neighbor eNB of said DeNB having X2 interface with said eNB; serving cell configuration information of said neighbor eNB of said DeNB;
serving cell configuration information added by said neighbor eNB of said DeNB;
serving cell configuration information modified by said neighbor eNB of said DeNB;
serving cell configuration information deleted by said neighbor eNE of said DeNB; neighbor cell configuration information of serving cell of said neighbor eNB of said DeNB; MME POOL information of said neighbor eNB of said DeNB;
energy-saving status of serving cell of said neighbor eNB of said DeNB

6. The method as claimed in claim 4, wherein, said DeNB indicates X2 interface does not exist in failure reason carried in handover preparation failure message.

7. A network device, being a Relay Node, RN, of a Donor evolved Node B, DeNB, said network device being configured to receive interface connectivity information sent by the DeNB, said network device comprising:
a reception unit (11), which is configured to receive an eNB configuration update message sent by the Donor evolved Node B, DeNB through an X2 interface; and
acquisition unit (12), which is configured to acquire interface connectivity information between said DeNB and a neighbor eNB of the DeNB carried in said message;
wherein the network device also comprises a judgment unit, which is used to:
judge that the configuration information carried in the message is that of said neighbor eNB of said DeNB or that of said DeNB through whether it is carried with a global eNB ID IE,
wherein the configuration update message of said DeNB carries a global eNB ID IE when the configuration update message carries configuration information of said neighbor eNB of said DeNB, and does not when the configuration update message carries configuration information of said DeNB.

8. The network device as claimed in claim 7, wherein said reception unit is also used to receive handover preparation failure message sent by said DeNB;
the network device also includes updating unit, which is used to update interface connectivity information between said DeNB and neighbor eNB of said DeNB according to failure reason carried in said handover preparation failure message that indicates X2 interface does not exist.

9. A Donor evolved Node B, DeNB, configured to send interface connectivity information to a Relay Node, RN, of the DeNB, comprising:
sending unit (21), which is configured to send an eNB configuration update message through an X2 interface, wherein the eNB configuration update message carries interface connectivity information between said DeNB and a neighbor eNB of the DeNB; wherein
said eNB configuration update message distinguishes that the carried configuration information is that of said neighbor eNB of said DeNB or that of said DeNB through whether it is carried with a global eNB ID IE; wherein the configuration update message of said DeNB carries a global eNB ID IE when the configuration update message carries configuration information of said neighbor EnB of said DeNB, and does not when the configuration update message carries configuration information of said DeNB.

10. A network system, comprising:
a network device according to claim 7 and DeNB according to claim 9.

## Patentansprüche

1. Verfahren für einen Relaisknoten, RN, eines von einem Donor entwickelten Knotens B, DeNB, zum Empfangen von Schnittstellenkonnektivitätsinformationen, die von dem DeNB gesendet werden, umfassend:
Empfangen (301), durch den RN, einer eNB-Konfigurationsakutalisierungsnachricht, die durch den DeNB gesendet wurde, über eine X2-Schnittstelle; und
Empfangen (302), durch den RN, von Schnittstellenkonnektivitätsinformationen zwischen dem DeNB und einem Nachbar-eNB des DeNB, die in der Nachricht transportiert werden; wobei
das Verfahren auch Folgendes umfasst, bevor die Schnittstellenkonnektivitätsinformationen zwischen dem DeNB und dem Nachbar-eNB des DeNB, die in den Informationen transportiert werden, erfasst werden:
Beurteilen, dass die in der Nachricht transportierten Konfigurationsinformationen die des Nachbar-eNB des DeNB oder die des DeNB sind, dadurch, ob sie mit einer globalen eNB-ID IE transportiert werden,
wobei die Konfigurationsaktualisierungsnachricht des DeNB eine globale eNB-ID IE transportiert, wenn die Konfigurationsaktualisierungsnachricht Konfigurationsinformationen des Nachbar-eNB des DeNB transportiert, und keine, wenn die Konfigurationsaktualisierungsnachricht Konfigurationsinformationen des DeNB transportiert.

2. Verfahren nach Anspruch 1, wobei die Schnittstellenkonnektivitätsinformationen die folgende eine oder mehrere Arten von Informationen enthalten: ID des Nachbar-eNB des DeNB mit X2-Schnittstelle mit dem DeNB; Bedienungszellen-Konfigurationsinformationen des Nachbar-eNE des DeNB;
Bedienungszellen-Konfigurationsinformationen, die von dem Nachbar-eNE des DeNB hinzugefügt werden;
Bedienungszellen-Konfigurationsinformationen, die von dem Nachbar-eNE des DeNB modifiziert werden;
Bedienungszellen-Konfigurationsinformationen, die von dem Nachbar-eNE des DeNB gelöscht werden;
Nachbarzellen-Konfigurationsinformationen der Bedienungszelle des Nachbar-eNE des DeNB;
MME-POOL-Informationen des Nachbar-eNE des DeNB;
Energiesparzustand der Bedienungszelle des Nachbar-eNE des DeNB.

3. Verfahren nach Anspruch 1, weiter umfassend:
Erfassen eines Fehlergrunds davon, der transportiert wird, nach Empfangen einer Übergabevorbereitungs-Fehlernachricht, die von dem DeNB gesendet wird, um das Nichtvorhandensein einer X2-Schnittstelle anzugeben, Aktualisieren von Schnittstellenkonnektivitätsinformationen zwischen dem DeNB und dem Nachbar-eNB des DeNB, die gemäß dem Fehlergrund gespeichert sind.

4. Verfahren für einen von einem Donor entwickelten Knoten B, DeNB, zum Senden von Schnittstellenkonnektivitätsinformationen an einen Relaisknoten, RN, des DeNB, umfassend:
Senden, durch den DeNB, einer eNB-Konfigurationsaktualisierungsnachricht über eine X2-Schnittstelle, wobei die Nachricht Schnittstellenkonnektivitätsinformationen zwischen dem DeNB und einem Nachbar-eNB des DeNB transportiert; wobei
die eNB-Konfigurationsaktualisierungsnachricht unterscheidet, dass die transportierten Konfigurationsinformationen die des Nachbar-eNB des DeNB oder die des DeNB sind, dadurch, ob sie mit einer globalen eNB-ID IE transportiert werden,
wobei die Konfigurationsaktualisierungsnachricht des DeNB eine globale eNB-ID IE transportiert, wenn die Konfigurationsaktualisierungsnachricht Konfigurationsinformationen des Nachbar-eNB des DeNB transportiert, und keine, wenn die Konfigurationsaktualisierungsnachricht Konfigurationsinformationen des DeNB transportiert.

5. Verfahren nach Anspruch 4, wobei die Schnittstellenkonnektivitätsinformationen die folgende eine oder mehrere Arten von Informationen enthalten: ID des Nachbar-eNB des DeNB mit X2-Schnittstelle mit dem eNB;
Bedienungszellen-Konfigurationsinformationen des Nachbar-eNE des DeNB;
Bedienungszellen-Konfigurationsinformationen, die von dem Nachbar-eNE des DeNB hinzugefügt werden;
Bedienungszellen-Konfigurationsinformationen, die von dem Nachbar-eNE des DeNB modifiziert werden;
Bedienungszellen-Konfigurationsinformationen, die von dem Nachbar-eNE des DeNB gelöscht werden;
Nachbarzellen-Konfigurationsinformationen der Bedienungszelle des Nachbar-eNE des DeNB;
MME-POOL-Informationen des Nachbar-eNE des DeNB;
Energiesparzustand der Bedienungszelle des Nachbar-eNE des DeNB

6. Verfahren nach Anspruch 4, wobei
der DeNB in dem Fehlergrund, der in der Übergabevorbereitungs-Fehlernachricht transportiert wird, angibt, dass die X2-Schnittstelle nicht vorhanden ist.

7. Netzwerkvorrichtung, die ein Relaisknoten, RN, eines von einem Donor entwickelten Knotens B, DeNB, ist, wobei die Netzwerkvorrichtung konfiguriert ist, um Schnittstellenkonnektivitätsinformationen zu empfangen, die von dem DeNB gesendet werden, wobei die Netzwerkvorrichtung Folgendes umfasst:
eine Empfangseinheit (11), die konfiguriert ist, um eNB-Konfigurationsaktualisierungsnachricht, die durch den von einem Donor entwickelten Knoten B, DeNB gesendet wurde, über eine X2-Schnittstelle zu empfangen;
und
Erfassungseinheit (12), die konfiguriert ist, um Schnittstellenkonnektivitätsinformationen zwischen dem DeNB und einem Nachbar-eNB des DeNB, die in der Nachricht transportiert werden, zu erfassen; wobei
die Netzwerkvorrichtung auch eine Beurteilungseinheit umfasst, die verwendet wird zum:
Beurteilen, dass die in der Nachricht transportierten Konfigurationsinformationen die des Nachbar-eNB des DeNB oder die des DeNB sind, dadurch, ob sie mit einer globalen eNB-ID IE transportiert werden, wobei die Konfigurationsaktualisierungsnachricht des DeNB eine globale eNB-ID IE transportiert, wenn die Konfigurationsaktualisierungsnachricht Konfigurationsinformationen des Nachbar-eNB des DeNB transportiert, und keine, wenn die Konfigurationsaktualisierungsnachricht Konfigurationsinformationen des DeNB transportiert.

8. Netzwerkvorrichtung nach Anspruch 7, wobei die Empfangseinheit auch verwendet wird, um eine Übergabevorbereitungs-Fehlernachricht zu empfangen, die von dem DeNB gesendet wird;
wobei die Netzwerkvorrichtung auch eine Aktualisierungseinheit einschließt, die verwendet wird, um Schnittstellenkonnektivitätsinformationen zwischen dem DeNB und dem Nachbar-eNB des DeNB gemäß dem Fehlergrund zu aktualisieren, der in der Übergabevorbereitungs-Fehlernachricht transportiert wird, die angibt, dass die X2-Schnittstelle nicht vorhanden ist.

9. Von einem Donor entwickelter Knoten B, DeNB, der konfiguriert ist, um Schnittstellenkonnektivitätsinformationen an einen Relaisknoten, RN, der DeNB zu senden, umfassend:
Sendeeinheit (21), die zum Senden einer eNB-Konfigurationsaktualisierungsnachricht über eine X2-Schnittstelle konfiguriert ist, wobei die eNB-Konfigurationsaktualisierungsnachricht Schnittstellenkonnektivitätsinformationen zwischen dem DeNB und einem Nachbar-eNB des DeNB transportiert; wobei
die eNB-Konfigurationsaktualisierungsnachricht unterscheidet, dass die transportierten Konfigurationsinformationen die des Nachbar-eNB des DeNB oder die des DeNB sind, dadurch, ob sie mit einer globalen eNB-ID IE transportiert werden; wobei die Konfigurationsaktualisierungsnachricht des DeNB eine globale eNB-ID IE transportiert, wenn die Konfigurationsaktualisierungsnachricht Konfigurationsinformationen des Nachbar-eNB des DeNB transportiert, und keine, wenn die Konfigurationsaktualisierungsnachricht Konfigurationsinformationen des DeNB transportiert.

10. Netzwerksystem, umfassend:
eine Netzwerkvorrichtung nach Anspruch 7 und einen DeNB nach Anspruch 9.

## Revendications

1. Procédé pour un nœud de relais, RN, d'un nœud évolué de donneur B, DeNB, pour recevoir des informations de connectivité d'interface envoyées par le DeNB, comprenant :
le RN recevant (301) un message de mise à jour de configuration d'eNB envoyé par le DeNB par le biais d'une interface X2 ; et
le RN acquérant (302) des informations de connectivité d'interface entre le DeNB et un eNB voisin du DeNB contenu dans ledit message ; dans lequel
le procédé comprend également le suivi avant l'acquisition des informations de connectivité d'interface entre ledit DeNB et l'eNB voisin du DeNB contenu dans lesdites informations :
l'estimation que les informations de configuration contenues dans le message sont celles dudit eNB voisin dudit DeNB ou celles dudit DeNB si elles sont contenues avec un ID IE d'eNB global,
dans lequel le message de mise à jour de configuration dudit DeNB contient un ID IE d'eNB global lorsque le message de mise à jour de configuration contient des informations de configuration dudit eNB voisin dudit DeNB et n'en contient pas lorsque le message de mise à jour de configuration contient des informations de configuration dudit DeNB.

2. Procédé selon la revendication 1, dans lequel lesdites informations de connectivité d'interface contiennent les un ou plusieurs types d'informations suivants : l'ID de l'eNB voisin dudit DeNB présentant une interface X2 avec ledit DeNB; des informations de configuration de cellule de desserte dudit eNE voisin dudit DeNB ;
des informations de configuration de cellule de desserte ajoutées par ledit eNE voisin dudit DeNB ;
des informations de configuration de cellule de desserte modifiées par ledit eNE voisin dudit DeNB ;
des informations de configuration de cellule de desserte supprimées par ledit eNE voisin dudit DeNB ;
des informations de configuration de cellule de desserte de cellule de desserte dudit eNE voisin dudit DeNB ;
des informations de groupe de MME dudit eNE voisin dudit DeNB ;
un état d'économie d'énergie de cellule de desserte dudit eNE voisin dudit DeNB.

3. Procédé selon la revendication 1, comprenant en outre :
l'acquisition d'une raison d'échec contenue de celui-ci après la réception d'un message d'échec de préparation de transfert envoyé par ledit DeNB pour indiquer la nonexistence d'une interface X2, mettre à jour des informations de connectivité d'interface entre ledit DeNB et l'eNB voisin dudit DeNB stocké selon ladite raison d'échec.

4. Procédé pour un nœud évolué de donneur B, DeNB, pour envoyer des informations de connectivité d'interface à un nœud de relais, NR, du DeNB, comprenant :
le DeNB envoyant un message de mise à jour de configuration d'eNB par le biais d'une interface X2, ledit message contenant des informations de connectivité d'interface entre ledit DeNB et un eNB voisin dudit DeNB ; dans lequel
ledit message de mise à jour de configuration d'eNB distingue que les informations de configuration contenues sont celles dudit eNB voisin dudit DeNB ou celles dudit DeNB si elles sont contenues avec un ID IE d'eNB global,
dans lequel le message de mise à jour de configuration dudit DeNB contient un ID IE d'eNB global lorsque le message de mise à jour de configuration contient des informations de configuration dudit eNB voisin dudit DeNB et n'en contient pas lorsque le message de mise à jour de configuration contient des informations de configuration dudit DeNB.

5. Procédé selon la revendication 4, dans lequel lesdites informations de connectivité d'interface contenant les un ou plusieurs types d'information suivants : l'ID de l'eNB voisin dudit DeNB présentant une interface X2 avec ledit eNB ;
des informations de configuration de cellule de desserte dudit eNE voisin dudit DeNB;
des informations de configuration de cellule de desserte ajoutées par ledit eNE voisin dudit DeNB ;
des informations de configuration de cellule de desserte modifiées par ledit eNE voisin dudit DeNB ;
des informations de configuration de cellule de desserte supprimées par ledit eNE voisin dudit DeNB ;
des informations de configuration de cellule de desserte de cellule de desserte dudit eNE voisin dudit DeNB ;
des informations de groupe de MME dudit eNE voisin dudit DeNB ;
un état d'économie d'énergie de cellule de desserte dudit eNE voisin dudit DeNB.

6. Procédé selon la revendication 4, dans lequel
ledit DeNB indique que l'interface X2 n'existe pas dans une raison d'échec contenue dans un message d'échec de préparation de transfert.

7. Dispositif de réseau, qui est un nœud de relais, RN, d'un nœud évolué de donneur B, DeNB, ledit dispositif de réseau étant configuré pour recevoir des informations de connectivité d'interface envoyées par le DeNB, ledit dispositif de réseau comprenant :
une unité de réception (11), qui est configurée pour recevoir un message de mise à jour de configuration d'eNB envoyé par le nœud évolué de donneur B, DeNB, par le biais d'une interface X2 ;
et
une unité d'acquisition (12), qui est configurée pour acquérir des informations de connectivité d'interface entre ledit DeNB et un eNB voisin du DeNB contenu dans ledit message ; dans lequel
le dispositif de réseau comprend également une unité d'estimation, qui est utilisée pour :
évaluer que les informations de configuration contenues dans le message sont celles dudit eNB voisin dudit DeNB ou celles dudit DeNB si elles sont portées avec un ID IE d'eNB global, dans lequel le message de mise à jour de configuration dudit DeNB contient un ID IE d'eNB global lorsque le message de mise à jour de configuration contient des informations de configuration dudit eNB voisin dudit DeNB, et n'en contient pas lorsque le message de mise à jour de configuration contient des informations de configuration dudit DeNB.

8. Dispositif de réseau selon la revendication 7, dans lequel ladite unité de réception est également utilisée pour recevoir un message d'échec de préparation de transfert envoyé par ledit DeNB ;
le dispositif de réseau inclut également une unité de mise à jour, qui est utilisée pour mettre à jour des informations de connectivité d'interface entre ledit DeNB et un eNB voisin dudit DeNB selon une raison d'échec contenue dans ledit message d'échec de préparation de transfert qui indique que l'interface X2 n'existe pas.

9. Nœud évolué de donneur B DeNB configuré pour envoyer des informations de connectivité d'interface à un nœud de relais, RN, du DeNB, comprenant :
une unité d'envoi (21), qui est configurée pour envoyer un message de mise à jour de configuration d'eNB par le biais d'une interface X2, dans lequel le message de mise à jour de configuration d'eNB contient des informations de connectivité d'interface entre ledit DeNB et un eNB voisin du DeNB ; dans lequel
ledit message de mise à jour de configuration d'eNB distingue que les informations de configuration contenues sont celles dudit eNB voisin dudit DeNB ou celles dudit DeNB si elles sont contenues avec un ID IE d'eNB global ; dans lequel le message de mise à jour de configuration dudit DeNB contient un ID IE d'eNB global lorsque le message de mise à jour de configuration contient des informations de configuration dudit EnB voisin dudit DeNB, et n'en contient pas lorsque le message de mise à jour de configuration contient des informations de configuration dudit DeNB.

10. Système de réseau, comprenant :
un dispositif de réseau selon la revendication 7 et un DeNB selon la revendication 9.
